# EUROPEAN PATENT APPLICATION

(11) **EP 4 764 752 A1**
(43) Date of publication of application: **24.06.2026**
(21) Application number: 25211951.6
(22) Date of filing: 29.10.2025
(51) Int. Cl.: G05B 19/418, B65B 57/00

(54) **A METHOD FOR IDENTIFYING PACKAGES TO BE DISCARDED OR SAMPLE PACKAGES FOR QUALITY ASSESSMENT**

(30) Priority: 17.12.2024 IT 202400028662
(71) Applicant: Tetra Laval Holdings & Finance S.A., 1009 Pully (CH)
(72) Inventor: Amici, Giacomo, 41123 Modena (IT); Bulgarelli, Daniele, 41123 Modena (IT)
(74) Representative: Tetra Pak Patent Attorneys

(57) **Abstract**

A computer-implemented method (900) for identifying packages (116) to be discarded and sample packages (302) for quality assessment in a package flow (300) is disclosed. The method comprises obtaining (902) a package ID related to one of the packages of the package flow (300), obtaining (904) sensor data (810) associated to the package ID, applying (906) a multi-output model designed for multitask learning on the sensor data (810), wherein the multi-output model is configured to output a discarding prediction as well as a sampling prediction, forming (908) a decision whether to remove the package from the package flow (300), pull the package from the package flow (300) to conduct quality assessment, or allow the package to proceed in the package flow (300) based on the discarding prediction and the sampling prediction, in case the decision (910) is to remove the package or pull the package from the package flow (300), generating (912) control data (816, 818) reflecting the decision, wherein the control data (816, 818) comprises command signals, and transmitting (914) the control data (816, 818) to a reject mechanism (820) arranged for removing the package from the conveyor system (308) or to a sampling mechanism (824) arranged for pulling the package from the package flow (300) to a quality assessment station (814).

## Description

### Technical Field

The invention generally relates to packaging technology. More particularly, it is related to a method for identifying packages to be discarded or removed from a package flow, a control circuity and a packaging machine comprising such control circuitry.

### Background Art

Today, within the food industry, it is well known to use roll-fed packaging machines for producing packages filled with milk or other beverages. To assure that the food product is not spoiled by microorganisms, the packages are sealed such that a risk of having spores, bacteria or other unwanted microorganisms coming into contact with the food product can be kept at a minimum. Even if having state of the art packaging material and sealing technology, the packages produced should be quality assessed to assure that package integrity is maintained. In addition to this, the quality assessment may also include aesthetic factors, such as detecting scratches or dents.

In addition to the quality assessment performed downstream the packaging machine, sometimes also referred to as filling machine, it is commonly known to identify packages to be removed and also remove these packages. The packages to be removed may be packages suffering from quality issues, but it may be also packages removed, or disposed, due to that the packaging machine is ramping up or in other ways are not performing within production temperature and pressure ranges. Further, if using an automatic splicing unit (ASU), allowing continuous operation of the packaging machine during a change of a packaging material reel, there will be packages produced comprising splice joints, that is, the packaging material overlap formed by the ASU, and these should be identified and removed.

Several techniques exist for identifying packages to be subject to quality assessment and also for identifying the packages to be removed. By way of example, smart cameras, that is, cameras with built-in image analysis functionality, may be used for identifying packages having deviations of different kinds and associating the different deviations to different actions, such as removal of the package. As further described in EP3397560B1, it is also known to use machine data, that is, machine settings used when producing a specific package, for determining which quality assessment steps to perform.

Even though there are different approaches available today for assessing packages produced by the packaging machine, there is still room for improvement. One area of improvement is flexibility. Different packaging machines, different package types, different food products, etc may require different sampling plans for quality assessment. If changing from producing one product to another, re-configuring the sampling plan will not only take time, but also pose a risk that the quality assessment is not set up adequately.

### Summary

It is an object of the invention to at least partly overcome one or more of the above-identified limitations of the prior art. In particular, it is an object to provide a method in which a number of different package deviations, identified by a variety of different classifiers, may be taken into account such that sample packages for quality assessment and packages to be removed can be reliably identified.

By being able to identify which packages to more closely examine, that is, choosing as the sample packages, it is made possible to improve an overall performance of the packaging machine since relevant package deviations may be captured at an early stage. This comes with the positive effect that machine settings may be adjusted or if, e.g. wear parts need to be replaced, that the machine can be closed down for service in time, thereby avoiding unnecessary product losses caused by that inadequate packages are produced. In addition, having a better understanding of the operation of the packaging machine also comes with the effect that the service intervals may be extended, that is, since the quality assessment can be improved by identifying the sample packages by taking into account more data than today, there is e.g. less need for time-based service intervals.

An advantage with using a multi-output model designed for multitask learning for generating the discarding prediction and the sampling direction is that one and the same model is used for several interrelated purposes. Having one and the same model in this way comes with the effect that if several packages with the same deviations are produced, one or a few of these packages may be subject to quality assessment while the remaining packages are removed, or discarded. Thus, even though using the same model for achieving multiple outputs comes with increased complexity, the overall performance of using the same model for both outputs can be improved.

According to a first aspect it is provided a computer-implemented method for identifying packages to be discarded and sample packages for quality assessment in a package flow, wherein the package flow comprises a plurality of packages fed along a conveyor system, said method comprising
obtaining a package ID related to one of the packages of the package flow,
obtaining sensor data associated to the package ID,
applying a multi-output model designed for multitask learning on the sensor data, wherein the multi-output model is configured to output a discarding prediction as well as a sampling prediction,
forming a decision whether to remove the package from the package flow, pull the package from the package flow to conduct quality assessment, or allow the package to proceed in the package flow based on the discarding prediction and the sampling prediction,
in case the decision is to remove the package or pull the package from the package flow, generating control data reflecting the decision, wherein the control data comprises command signals, and
transmitting the control data to a reject mechanism arranged for removing the package from the conveyor system or to a sampling mechanism arranged for pulling the package from the package flow to a quality assessment station.

The multi-output model may be a machine learning model, wherein the machine learning model has been trained by means of reference sensor data indicative of decisions to remove the packages from the package flow, to pull the packages from the package flow to conduct quality assessment or to allow the package to proceed based on reference packages associated with the reference sensor data.

The method may further comprise, in case the decision is to pull the package from the package flow to conduct quality assessment, obtaining quality assessment data associated with the package ID from the quality assessment station, and providing the quality assessment data as additional input to the machine learning model.

By feeding back the quality assessment data and using this as additional input, it is made possible to over time improve the model based on the quality assessments made, thereby making it possible for the model to improve over time by closing gaps and also adjust to changed conditions.

The method may further comprise obtaining configuration data defining sampling criteria and discarding criteria, and adapting a decision criteria used in the step of forming the decision based on the configuration data.

The sampling criteria may define a number of sampling patterns linked to different types of deviations of the package.

By having different sampling patterns, or sampling strategies, linked to different types of deviations, it is made possible to provide for that deviations are assessed in a controlled and structured manner, that is, deviations of the same type may be assessed in the same manner.

The discarding criteria may define a number of types of deviations required for removal of the package from the package flow.

Different packaging machines may be subject to different quality requirements. By being able to adapt the discarding criteria such that different types of deviations are specifically addressed, it is made possible to use the benefits of machine learning and at the same time assure that packages not considered to meet set quality requirements are allowed to pass.

The sensor data may comprise one or more of the following: image data, velocity data, sealing temperature data and tube pressure data.

The package may be equipped with an opening device.

According to a second aspect it is provided a control circuitry configured to identify packages to be discarded and sample packages for quality assessment in a package flow, wherein the package flow comprises a plurality of packages fed along a conveyor system, wherein the control circuitry comprises a processor and a memory, wherein said control circuitry is configured to
obtain a package ID related to one of the packages of the package flow,
obtain sensor data associated to the package ID,
apply a multi-output model designed for multitask learning on the sensor data, wherein the multi-output model is configured to output a discarding prediction as well as a sampling prediction,
form a decision whether to remove the package from the package flow, pull the package from the package flow to conduct quality assessment, or allow the package to proceed in the package flow based on the discarding prediction and the sampling prediction,
in case the decision is to remove the package or pull the package from the package flow, generating control data reflecting the decision, wherein the control data comprises command signals, and
transmit the control data to a reject mechanism arranged for removing the package from the conveyor system or to a sampling mechanism arranged for pulling the package from the package flow to a quality assessment station.

The multi-output model may be a machine learning model, wherein the machine learning model has been trained by means of reference sensor data indicative of decisions to remove the packages from the package flow, to pull the packages from the package flow to conduct quality assessment or to allow the package to proceed based on reference packages associated with the reference sensor data.

The control circuitry may be further configured to, in case the decision is to pull the package from the package flow to conduct quality assessment, obtain quality assessment data associated with the package ID from the quality assessment station, and provide the quality assessment data as additional input to the machine learning model.

The control circuitry may be further configured to obtain configuration data defining sampling criteria and discarding criteria, and adapt a decision criteria used in the step of forming the decision based on the configuration data.

The sampling criteria may define a number of sampling patterns linked to different types of deviations of the package.

The same features and advantages as presented with respect to the first aspect also apply to this second aspect.

According to a third aspect it is provided a packaging machine comprising a control circuitry according to the second aspect, a reject mechanism communicatively connected to the control circuitry, and a sampling mechanism communicatively connected to the control circuitry.

According to a fourth aspect it is provided a computer program product, loadable in a memory of at least one processor and comprising instructions suitable for performing the steps of the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a packaging, more particularly a roll-fed packaging machine arranged to produce brick-shaped packages.
Fig. 2 is a cross-sectional view of a transversal sealing process taking place in a lower end of a tube in the packaging machine illustrated in fig. 1.
Fig. 3 generally illustrates the principle of how different classifiers can be combined with sensor data obtained from the packaging machine for identifying sample packages for quality assessment.
Fig. 4 illustrates a first sampling strategy, herein referred to as forced pre-defined pattern.
Fig. 5 illustrates a second sampling strategy, herein referred to as selected defect strategy.
Fig. 6 illustrates a third sampling strategy, herein referred to as full clean strategy.
Fig. 7 illustrates a fourth sampling strategy, herein referred to as custom sampling pattern.
Fig. 8 illustrates an apparatus comprising a control circuitry communicatively connected to a quality assessment station and a package removal station.
Fig. 9 is a flowchart illustrating a method for identifying packages to be discarded and sample packages for quality assessment.

### Detailed Description

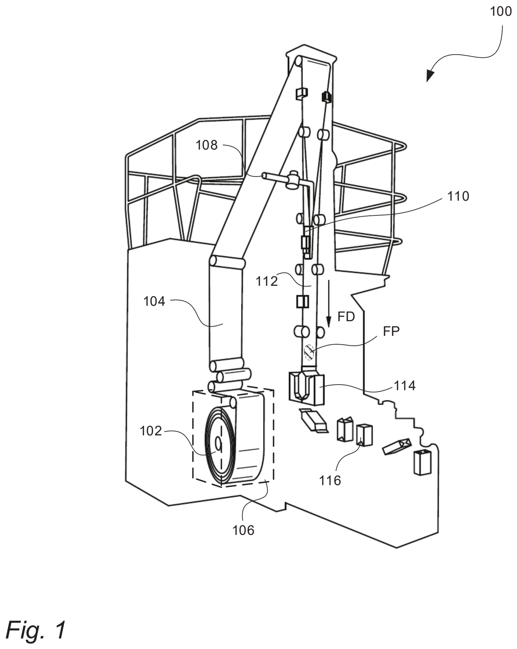

Fig. 1 generally illustrates a packaging machine 100, more particularly a roll-fed packaging machine for producing brick-shaped packages 116. As illustrated, a reel of packaging material 102, comprising a rolled up web 104, may be fed into a packaging material receiver 106 of the machine. After being sterilized, e.g. by using hydrogen peroxide, the web may be formed into a tube 112 by having longitudinal edges of the web 104 attached to one another in a longitudinal sealing station 110. A food product pipe 108 can be introduced into the tube from above such that food product FP, e.g. milk or orange juice, can be filled into to the tube. In a lower end of the tube 112, a transversal sealing station 114 can be placed such that packages can be formed from the tube 112. A well-known packaging machine following this principle is by way of example Tetra Pak^{®} A1 producing Tetra Brik^{®} packages marketed by Tetra Pak^{®}.

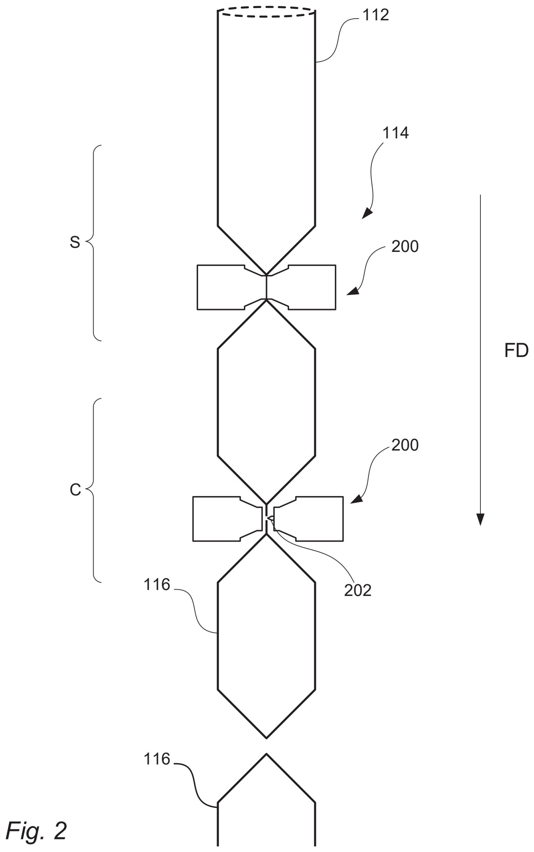

Fig. 2 illustrates the transversal sealing station 114 in further detail. As illustrated, the transversal sealing station 114 can comprise sealing jaws 200 that is following the tube in a feeding direction FD. In a first stage of the transversal sealing process, referred to as a sealing stage S, two opposing sides of the tube is attached such that the food product in a lower part of the tube 112 is separated from the food product above. The sealing jaws 200 may use induction heating or ultrasonic heating for melting an outer protective layer of the packaging material such that a transversal sealing can be formed after pressure has been applied. In a subsequent stage, herein referred to as a cutting stage C, the transversal sealing obtained during the sealing stage S, is cut such that this is formed into a top fin and a bottom fin on two subsequent packages. This technology provides several benefits. First, by using this approach it is made possible to reduce the risk that microorganisms end up inside the package, thereby making it possible to produce so-called aseptic packages. Second, by having the sealing jaws moving together with the tube, impressive speeds may be achieved, 30 000 packages per hour and above. Producing at high speed comes with the effect that the packages can be produced cost efficiently. Producing packages at such speeds however also comes with the risk that only minor inaccuracies or changed conditions may result in that the packages are not fulfilling set conditions in one way or the other. For that reason, a quality assessment station is placed downstream for continuously monitoring in the packages 116 produced.

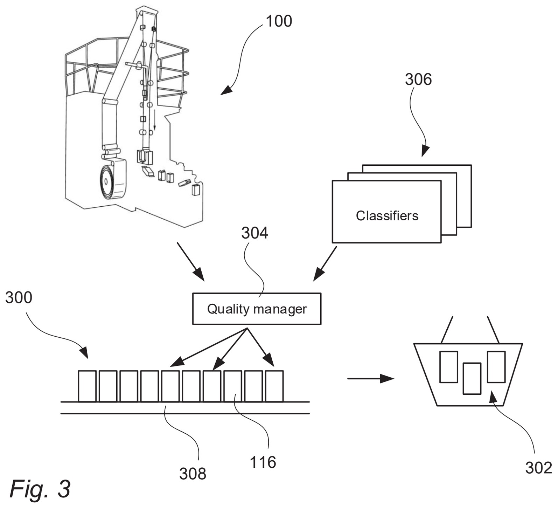

Fig. 3 illustrates, by way of example, an approach for identifying packages 116 to be discarded, or removed, and sample packages 302 for quality assessment in a package flow 300 of packages 116 on a conveyor system 308 produced by the packaging machine 100. As illustrated, sensor data may be provided from the packaging machine 100 to a quality manager 304, which may be a software module or a control circuitry configured for identifying the sample packages 302 and the packages to be removed. The sensor data may be image data captured by cameras at different stations in the packaging machine 100, such as the longitudinal sealing station 110 or the transversal sealing station 114. The sensor data may also comprise velocity data associated with the web 104, the sealing jaws 200 or other moving components of the filling machine, sealing temperature data related to the longitudinal sealing station and/or the transversal sealing station, as well as tube pressure data, that is, a pressure inside the tube at different time points.

In addition to the sensor data, defects, or deviations, identified by one or more classifiers 306 may be provided to the quality manager 304. The classifiers may be so-called Al classifiers, e.g. a neural network trained for detecting dents in the packages based on image data depicting the packages, and another neural network trained for detecting scratches on the packages using the image data as input.

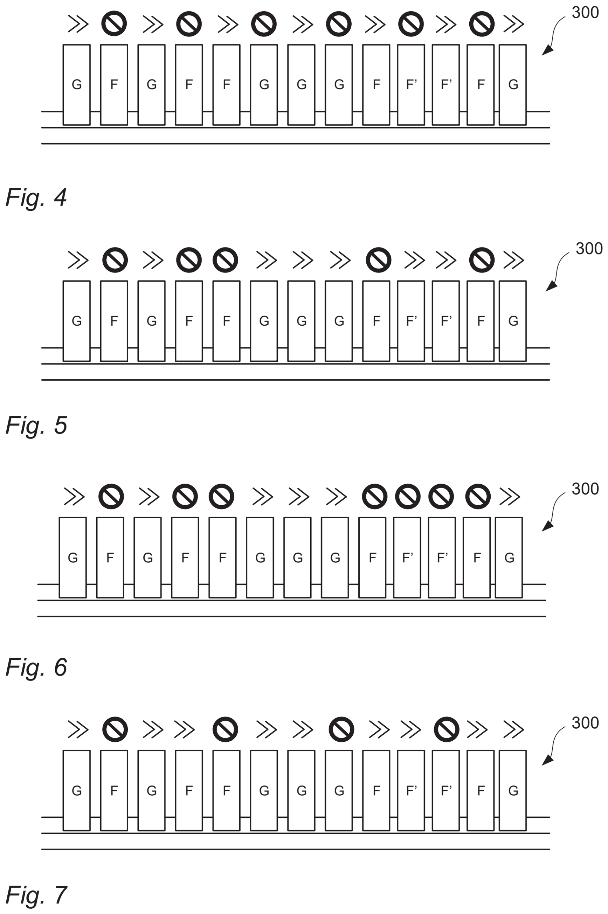

Over time different sampling strategies may be used. For instance, during ramping up, that is, when starting up the filling machine 100, there may be good reasons to use a so-called forced pre-defined pattern for sampling to assure that the ramping up is following an expected scheme, that is, the start-up of the machine is progressing as expected. An example of such sampling strategy is illustrated in fig. 4. As illustrated, by way of example, the package flow 300 comprises a number of packages. Among the packages, good packages G, that is, packages without any identified deviations, can be found. Further, faulty packages F identified to have a first type of defect can also be found. In addition, faulty packages F' identified to have a second type of defect can be found as well. When following the forced pre-defined pattern, every other package, starting with the first one to the left, is allowed to pass, marked by ">>" in fig. 4, and the remaining packages, every other package starting with the second from the left, is subject to quality assessment and thereafter removal, marked by a non-permission sign.

Another strategy, illustrated in fig. 5, may involve removing, which may involve quality assessing and thereafter removing, the packages identified to have a specific defect, herein the first type of defect. This type of strategy may be useful in case a specific type of defect cannot be allowed while others may be acceptable. For instance, in case the packages being produced comprises a printed list of ingredients and this must be made readable to consumers, defects in the form of scratches in the area of packages where the printed list of ingredients are placed may not be allowed and hence addressed accordingly.

A third strategy, illustrated in fig. 6, may involve a so-called full clean option, that is, removing any package in the package flow 300 comprising a defect. As illustrated, in the example illustrated this involves removing packages having the first type of defect as well as the second type of defect.

Still an option, illustrated in fig. 7, is to create a customized sampling pattern, herein illustrated by having every third package in the package flow 300 being subject to quality assessment.

Even though the examples illustrated in fig. 4 to 7 are handling identifying packages for quality assessment and packages for removal as a group, it is also possible to identify these two types of packages as two different groups, that is, the packages of the package flow may be identified as the sample packages, packages to be removed or packages to be allowed to pass.

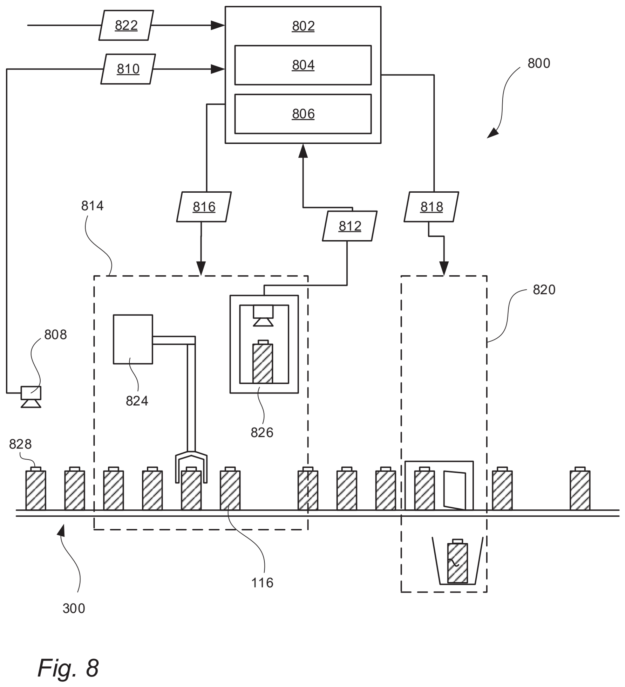

Fig. 8 illustrates an arrangement 800 comprising a control circuitry 802 communicatively connected to a quality assessment station 814 and a removal station 820, wherein the arrangement 800 is configured for implementing the approach generally illustrated in fig. 3.

As illustrated, the control circuitry 802 may comprise a processor 804 and a memory 806, providing for that a computer program product can be run such that the sample packages 304 can be identified and also such that the packages to be removed can be identified in the package flow 300 provided by the packaging machine 100. In addition to holding instructions for performing a method for identifying the sample packages and the packages to be removed, the memory 806 and the processor 804 may also comprise the classifiers 306 discussed above and illustrated in fig. 3. Further, if not illustrated, the control circuitry 802 may be communicatively connected to a server or other external data processing apparatus such that part of the computational work can be made elsewhere.

As described above, the sensor data 810 may take various forms. In the example illustrated in fig. 8, the sensor data 810 is provided to the control circuitry 802 as image data captured by a camera 808. Quality assessment data 812 generated by the quality control station 814 can also be provided to the control circuitry 802 and be used as input to the model used in the control circuitry. In line with the description above, the model may be a multi-output model designed for multitask learning on the sensor data 810, and optionally also the quality assessment data 812. The model may be arranged to output control data 816, 818 in two different forms, control data 816 to the quality assessment station 814 and control data 818 to a removal station 820, also referred to as reject mechanism. The removal station 820 may, as illustrated, be embodied by a pusher, or diverter, used for redirecting a package identified to be removed from the conveyor system, such as a conveyor belt, down into a bin for collecting removed packages. The pusher is an example of a reject mechanism.

As illustrated, the control circuitry 802 may be arranged to obtain configuration data 822. This data may define a sampling criteria and/or a discarding criteria. The data may be provided from an operator device, such as a lap top, tablet or the like. In this way, the settings of the arrangement 800 can be customized, e.g. to have the sampling made according to one of the strategies exemplified in fig. 4 to 7.

The quality assessment station 814 may be embodied in various ways. As illustrated, a picker 824, or more generally a sampling mechanism, may be used for collecting the sample packages 302 for the package flow 300. As illustrated, the picker may be a robotic arm, but other devices are equally possible. Further, it is also possible to have the operator acting as the picker. However, due to the speed of the package flow, if a specific package is to be collected it may be needed to use a robotic arm, a pusher or the like for being able to act quick enough. The packages may have package IDs such that these can be identified. The package IDs may be printed information on the packages, such as QR codes or any other two dimensional codes. As an alternative to having the package IDs in the form of printed information, magnetic marks or other machine readable non-printed identifiers may also be applied. Still further, the package IDs may be virtual in that any formed package is provided with an ID and followed via cameras throughout the packaging machine.

The quality assessment station 814 may also comprise a quality assessment device 826, herein exemplified by a camera-equipped quality assessment station. In this device, the sample packages can be assessed, e.g. in that image data is collected via a number of different cameras such that a 3D image of the sample package can be formed and compared to a reference 3D image.

The packages 116 may be provided with opening devices 828. The devices may come in different forms. They may be pre-applied caps, applied before the packages are formed and filled, and they may be post-applied caps, applied after the packages are formed and filled. In addition to being embodied as caps, the opening devices may also be pull-tabs, straw holes or any other package feature that allows the user to get access to the food product held inside.

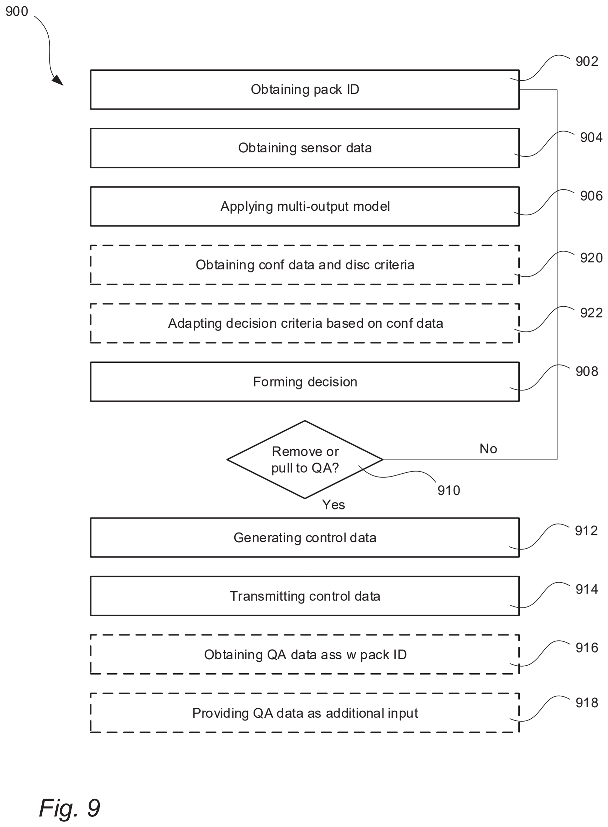

Fig. 9 is a flow chart illustrating a method 900 for identifying the packages to be discarded and the sample packages 302 for quality assessment in the package flow 300. The method can comprise obtaining 902 the package ID related to one of the packages of the package flow 300, obtaining 904 the sensor data 810 associated to the package ID, applying 906 the multi-output model designed for multitask learning on the sensor data 810, forming 908 a decision whether to remove the package from the package flow 300, pull the package from the package flow 300 to conduct quality assessment, or allow the package to proceed in the package flow 300 based on the discarding prediction and the sampling prediction, in case the decision 910 is to remove the package or pull the package from the package flow 300, generating 912 control data 816, 818 reflecting the decision, wherein the control data 816, 818 comprises command signals, and transmitting 914 the control data 816, 818 to a reject mechanism 820 arranged for removing the package from the conveyor system 308 or to a sampling mechanism 824 arranged for pulling the package from the package flow 300 to a quality assessment station 814.

Optionally, the method may further comprise obtaining 916 the quality assessment data 812 associated with the package ID from the quality assessment station 814, and providing 918 the quality assessment data 812 as additional input to the machine learning model.

In addition, also optional, the method may further comprise obtaining 920 the configuration data 822 defining sampling criteria and discarding criteria, and adapting 922 the decision criteria used in the step of forming the decision based on the configuration data 822.

From the description above follows that, although various embodiments of the invention have been described and shown, the invention is not restricted thereto, but may also be embodied in other ways within the scope of the subject-matter defined in the following claims.

## Claims

1. A computer-implemented method (900) for identifying packages (116) to be discarded and sample packages (302) for quality assessment in a package flow (300), wherein the package flow (300) comprises a plurality of packages (116) fed along a conveyor system (308), said method comprising
obtaining (902) a package ID related to one of the packages of the package flow (300),
obtaining (904) sensor data (810) associated to the package ID,
applying (906) a multi-output model designed for multitask learning on the sensor data (810), wherein the multi-output model is configured to output a discarding prediction as well as a sampling prediction,
forming (908) a decision whether to remove the package from the package flow (300), pull the package from the package flow (300) to conduct quality assessment, or allow the package to proceed in the package flow (300) based on the discarding prediction and the sampling prediction,
in case the decision (910) is to remove the package or pull the package from the package flow (300), generating (912) control data (816, 818) reflecting the decision, wherein the control data (816, 818) comprises command signals, and
transmitting (914) the control data (816, 818) to a reject mechanism (820) arranged for removing the package from the conveyor system (308) or to a sampling mechanism (824) arranged for pulling the package from the package flow (300) to a quality assessment station (814).

2. The method according to claim 1, wherein the multi-output model is a machine learning model, wherein the machine learning model has been trained by means of reference sensor data indicative of decisions to remove the packages (116) from the package flow (300), to pull the packages from the package flow to conduct quality assessment or to allow the package to proceed based on reference packages associated with the reference sensor data.

3. The method according to claim 2, further comprising
in case the decision (910) is to pull the package from the package flow (300) to conduct quality assessment,
obtaining (916) quality assessment data (812) associated with the package ID from the quality assessment station (814),
providing (918) the quality assessment data (812) as additional input to the machine learning model.

4. The method according to any one of the preceding claims, further comprising
obtaining (920) configuration data (822) defining sampling criteria and discarding criteria, and
adapting (922) a decision criteria used in the step of forming the decision based on the configuration data (822).

5. The method according to claim 4, wherein the sampling criteria define a number of sampling patterns linked to different types of deviations of the package.

6. The method according to claim 4 or 5, wherein the discarding criteria define a number of types of deviations required for removal of the package from the package flow.

7. The method according to any one of the preceding claims, wherein the sensor data (810) comprises one or more of the following: image data, velocity data, sealing temperature data and tube pressure data.

8. The method according to any one of the preceding claims, wherein the package (116) is equipped with an opening device (828).

9. A control circuitry (802) configured to identify packages (116) to be discarded and sample packages (302) for quality assessment in a package flow (300), wherein the package flow (300) comprises a plurality of packages (116) fed along a conveyor system (308), wherein the control circuitry (802) comprises a processor (804) and a memory (806), wherein said control circuitry is configured to
obtain a package **ID** related to one of the packages of the package flow (300),
obtain sensor data (810) associated to the package ID,
apply a multi-output model designed for multitask learning on the sensor data (810), wherein the multi-output model is configured to output a discarding prediction as well as a sampling prediction,
form a decision whether to remove the package from the package flow (300), pull the package from the package flow (300) to conduct quality assessment, or allow the package to proceed in the package flow (300) based on the discarding prediction and the sampling prediction,
in case the decision (910) is to remove the package or pull the package from the package flow (300), generate control data (816, 818) reflecting the decision, wherein the control data (816, 818) comprises command signals, and
transmit the control data (816, 818) to a reject mechanism (820) arranged for removing the package from the conveyor system (308) or to a sampling mechanism (824) arranged for pulling the package from the package flow (300) to a quality assessment station (814).

10. The control circuitry according to claim 9, wherein the multi-output model is a machine learning model, wherein the machine learning model has been trained by means of reference sensor data indicative of decisions to remove the packages (116) from the package flow (300), to pull the packages from the package flow to conduct quality assessment or to allow the package to proceed based on reference packages associated with the reference sensor data.

11. The control circuitry according to claim 10, wherein the control circuitry is further configured to
in case the decision is to pull the package from the package flow (300) to conduct quality assessment,
obtain quality assessment data (812) associated with the package ID from the quality assessment station (814),
provide the quality assessment data (812) as additional input to the machine learning model.

12. The control circuitry according to any one of the claims 9 to 11, further configured to
obtain configuration data (822) defining sampling criteria and discarding criteria, and
adapt a decision criteria used in the step of forming the decision based on the configuration data (822).

13. The control circuitry according to claim 12, wherein the sampling criteria define a number of sampling patterns linked to different types of deviations of the package.

14. A packaging machine (100) comprising a control circuitry (802) according to any one of the claims 9 to 12, a reject mechanism (820) communicatively connected to the control circuitry (802), and a sampling mechanism (824) communicatively connected to the control circuitry (802).

15. A computer program product, loadable in a memory of at least one processor and comprising instructions suitable for performing the steps of the method (300) according to any of the claims 1 to 9.
